# EUROPÄISCHE PATENTSCHRIFT

(11) **EP 3 812 621 B1**
(45) Veröffentlichungstag und Bekanntmachung des Hinweises auf die Patenterteilung: **28.09.2022**
(21) Anmeldenummer: 20198068.7
(22) Anmeldetag: 24.09.2020
(51) Int. Cl.: F16H 37/04, F16H 37/08

(54) **GETRIEBE, VERWENDUNG EINES GETRIEBES UND VERFAHREN FÜR EIN GETRIEBE**
TRANSMISSION, USE OF A TRANSMISSION AND METHOD FOR A TRANSMISSION
ENGRENAGE, UTILISATION D'UN ENGRENAGE ET PROCÉDÉ POUR UN ENGRENAGE

(30) Priorität: 23.10.2019 DE 102019216300
(43) Veröffentlichungstag der Anmeldung: 28.04.2021
(73) Patentinhaber: Deere & Company, Moline, IL 61265 (US)
(72) Erfinder: Eisenhardt, Christoph, 68163 Mannheim (DE); Raisch, Stefan, 68163 Mannheim (DE)
(74) Vertreter: Dehnhardt, Florian Christopher

(56) Entgegenhaltungen:
- EP-A1- 3 109 509
- DE-A1-102011 084 037
- DE-A1-102014 226 469

## Beschreibung

Die Erfindung betrifft ein Getriebe mit zumindest einer ersten und einer zweiten Welle, wobei zumindest eine erste und eine zweite Schaltgruppe zwischen der ersten und der zweiten Welle angeordnet sind, wobei jede der Schaltgruppen zumindest zwei einzeln schaltbare Übertragungseinheiten zur Übertragung eines Drehmomentes aufweist, die sich hinsichtlich ihres Übersetzungsverhältnisses voneinander unterscheiden.

Derartige Getriebe kommen üblicherweise als sogenannte Lastschaltgetriebe bei Landmaschinen zum Einsatz und dienen der Übertragung einer mechanischen Leistung von einem Antriebsmotor auf einen Antriebsstrang des entsprechenden Fahrzeuges. Hierbei ist es entscheidend, dass die Getriebe derart ausgelegt sind, dass einerseits eine große Spreizung gewährleistet wird und zugleich die zu synchronisierende Massenträgheit möglichst gering ist. Aus diesem Grunde weisen derartige Getriebe üblicherweise eine Vielzahl von Gängen auf, um die große Spreizung überbrücken zu können. Diese einzelnen Gänge werden durch die Schaltung der beiden Schaltgruppen zueinander realisiert, wobei die erste Schaltgruppe üblicherweise auch als Gangschaltgruppe und die zweite Schaltgruppe als Bereichsschaltgruppe bezeichnet wird. Sofern zumindest beide Schaltgruppen zumindest zwei Übertragungseinheiten aufweisen, lassen sich insgesamt vier Gänge realisieren, wobei sich die Mindestanzahl der Gänge aus dem Produkt der Anzahl beider Schaltgruppen ergibt.

EP3109509 offenbart ein Getriebe, welches nach Auffassung der Prüfungsabteilung des europäischen Patentamts unter den Wortlaut des Oberbegriffs des Anspruchs 1 fällt.

DE102014226469A1 beschreibt ein Umlaufrädergetriebe mit mehreren Abtriebswellen. DE102011084037A1 zeigt ein Kraftfahrzeuggetriebe mit einem Planetengetriebe, um zwei Gangpaare miteinander zu koppeln.

Ausgehend von diesem Stand der Technik ist es stets ein Bestreben, die Anzahl der Gänge zu erhöhen, um die Übergänge hinsichtlich der Übersetzungsverhältnisse zwischen den einzelnen Gängen möglichst fließend innerhalb der Spreizung ausbilden zu können. Darüber hinaus sollen diese Gänge auch möglichst unter Last schaltbar sein. Als Gang wird im Rahmen der Erfindung stets eine Kombination aus zugeschalteten Übertragungseinheiten der ersten und der zweiten Schaltgruppe verstanden, die zusammen ein bestimmtes Übersetzungsverhältnis zwischen der ersten und der zweiten Welle erzeugen.

Der vorliegenden Erfindung liegt die Aufgabe zugrunde, ein Getriebe anzugeben, das sich gegenüber den bislang bekannten Getrieben durch eine große Anzahl von Gängen und einer zugleich geringen Anzahl von Kupplungen auszeichnet.

Diese Aufgabe wird gelöst durch ein Getriebe gemäß Anspruch 1. Erfindungsgemäß kann die erste Schaltgruppe über eine Planetenstufe mit der ersten Welle in Wirkverbindung gebracht werden, wobei die Planetengruppe derart ausgebildet ist, dass eine über die erste Welle eingebrachte mechanische Leistung über einen ersten und/oder über einen zweiten zu- oder abkoppelbaren Leistungspfad auf die zweite Welle übertragbar ist, wobei jedem Leistungspfad zumindest eine Übertragungseinheit der ersten Schaltgruppe zugeordnet ist und wobei in zumindest einem Schaltzustand der ersten Schaltgruppe der Leistungsfluss über zumindest jeweils eine Übertragungseinheit des ersten und des zweiten Leistungspfades verläuft.

Demnach ist die erste Schaltgruppe derart ausgebildet, dass die Leistung nicht nur über lediglich eine, sondern über zumindest zwei Leistungspfade übertragen werden kann, wobei die Übertragung der Leistung entsprechend über jeweils eine zugeordnete Übertragungseinheit erfolgt. Als Übertragungseinheit kommen beispielsweise Zahnradpaare in Betracht, wobei sich das Übersetzungsverhältnis eines solchen Zahnradpaares aus dem Durchmesserunterschied der einzelnen Zahnräder zueinander ergibt. Im Rahmen der Erfindung werden die Zahnräder dieser Zahnradpaare auch als Antriebszahnrad und als Abtriebszahnrad bezeichnet, wobei ein Drehmoment von dem Antriebszahnrad auf das Abtriebszahnrad übertragen wird. Bei einer Direktkupplung werden die beiden Wellen unmittelbar miteinander gekoppelt, sodass folglich das Übersetzungsverhältnis einen Wert von i=1 annimmt, wobei der Wert i für das Übersetzungsverhältnis steht und sich aus dem Verhältnis der Drehzahl der Antriebswelle zu der Drehzahl der Abtriebswelle ergibt. Ein solches Übersetzungsverhältnis kann selbstverständlich auch mit einem Zahnradpaar realisiert werden.

Gemäß der Erfindung weist die erste Schaltgruppe zumindest zwei Außenwellenabschnitte auf, die die erste Welle koaxial umgeben, wobei jeweils zumindest eine der Übertragungseinheiten auf einem der Außenwellenabschnitte angeordnet ist und wobei ein erster Außenwellenabschnitt dem ersten Leistungspfad und ein zweiter Außenwellenabschnitt dem zweiten Leistungspfad zugeordnet ist. Demnach sind zumindest zwei Übertragungseinheiten auf zwei unabhängig voneinander rotierbaren Außenwellenabschnitten angeordnet. Hierdurch ist es möglich, dass beide Leistungspfade gleichzeitig zugeschaltet werden können, da die Drehzahl beider Außenwellenabschnitte voneinander entkoppelt werden kann.

Für die Einbindung dieser Außenwellenabschnitte in die einzelnen Leistungspfade weist die Planetenstufe bevorzugt einen Leistungseingang und zumindest zwei Leistungsausgänge auf, die jeweils mit einem der Leistungspfade in Verbindung stehen, wobei zwischen den beiden Leistungsausgängen der Planetenstufe eine Planetenkupplung angeordnet ist, die in einem zugekoppelten Zustand die beiden Leistungsausgänge unmittelbar miteinander verbindet. Planetenstufen weisen üblicherweise eine Vielzahl einander umlaufender Räder auf, die entweder als Leistungseingang oder aber auch als Leistungsausgang dienen können. Beispielsweise können die Räder als Sonnenräder, Planetenräder und Hohlräder ausgestattet sein, wobei insbesondere Hohlräder keinen zwingenden Bestandteil einer solchen Planetenradstufe darstellen. Das Sonnenrad befindet sich im Zentrum der Planetenstufe und wird von den Planetenrädern umlaufen, wobei die Planetenräder über einen Planetenträger miteinander verbunden sind. Demnach können das Sonnenrad, der Planetenträger und auch das Hohlrad als Leistungseingang oder als Leistungsausgang dienen. Hierzu erfolgt eine Anbindung an die entsprechende Welle, wobei im Rahmen der Erfindung jeweils zwei Leistungsausgänge der Planetenstufe jeweils mit einem Außenwellenabschnitt verbunden bzw. verbindbar sind und wobei der Leistungseingang unmittelbar oder unter Einbindung einer zusätzlichen Übertragungseinheit mit der ersten Welle verbunden ist. Über diese zusätzliche Übertragungseinheit kann beispielsweise eine Unter- oder auch eine Übersetzung realisiert werden.

Eine bevorzugte Ausgestaltung der Planetenstufe sieht zumindest zwei nebeneinander angeordnete Sonnenräder und zwei nebeneinander angeordnete Planetenradsätze vor, wobei jeder Planetenradsatz aus einem Planetenträger und einzelnen Planetenrädern besteht. Die Planetenträger sind unmittelbar miteinander gekoppelt und darüber hinaus als ein erster Leistungsausgang mit einem der Außenwellenabschnitte verbunden. Der zweite Leistungsausgang wird über ein Sonnenrad verwirklicht, das entsprechend mit dem anderen Außenwellenabschnitt verbunden ist. Als Leistungseingang dient das andere Sonnenrad, sodass jeweils ein Sonnenrad als Leistungseingang und ein Sonnenrad als Leistungsausgang vorgesehen ist. Die beiden nebeneinander angeordneten Sonnenräder und Planetenradsätze sind ferner bevorzugt so ausgelegt, dass diese sich hinsichtlich ihres Übersetzungsverhältnisses voneinander unterscheiden. So ist bevorzugt das Sonnenrad im Leistungseingang größer ausgebildet als im Leistungsausgang und die Planetenräder im Leistungseingang sind entsprechend kleiner ausgebildet als im Leistungsausgang.

Durch Zukopplung der Planetenkupplung wird erreicht, dass beide Leistungsausgänge und damit beide Außenwellenabschnitte die gleiche Drehzahl aufweisen. Demnach erfolgt eine Zukopplung nur dann, wenn lediglich eine Übertragungseinheit zugeschaltet bzw. wenn die Leistung nur über einen Leistungspfad übermittelt werden soll. Sofern in beiden Leistungspfaden eine Zukopplung jeweils einer Übertragungseinheit erfolgen soll, muss die Planetenkupplung entkoppelt werden, sodass die beiden Drehzahlen der Außenwellenabschnitte bzw. in den beiden Leistungspfaden voneinander unabhängig sind.

Gemäß einer bevorzugten Ausgestaltung ist die Planetenkupplung als Lamellenkupplung mit einem Innen- und einem Außenlamellenträger ausgeführt, wobei die Lamellenträger jeweils mit einem der Leistungsausgänge der Planetenstufe und einem der Leistungspfade, insbesondere mit einem der Außenwellenabschnitte, in Verbindung stehen. Bevorzugt ist der äußere Lamellenträger mit dem Planetenträger der Planetenstufe und der innere Lamellenträger mit dem als Leistungsausgang fungierenden Sonnenrad der Planetenstufe verbunden.

Auch ist bevorzugt jeder Übertragungseinheit der ersten Schaltgruppe eine Kupplung zugeordnet, die ebenfalls bevorzugt als Lamellenkupplung ausgebildet ist und über die die Übertragungseinheit zu- oder entkoppelt werden kann.

Auch zwischen der ersten Welle und dem Leistungseingang der Planetenstufe ist bevorzugt eine Kupplung, insbesondere eine Lamellenkupplung, vorgesehen. Dies hat den Vorteil, dass in einer einfachen Art und Weise eine Reversiereinheit zwischen der ersten Welle und der Planetenstufe angeordnet werden kann, die ebenfalls koppelbar ausgebildet ist und die im zugekoppelten Zustand eine Umkehrung der Drehrichtung der Planetenstufe bewirkt. In einem solchen Fall wird die Kupplung zwischen der ersten Welle und dem Leistungseingang der Planetenstufe gelöst, wobei vorzugsweise auch der Leistungseingang, z. B. an dem Sonnenrad der Planetenstufe, mit einem Außenwellenabschnitt verbunden ist, der die erste Welle koaxial umschließt. An diesen Außenwellenabschnitt schließt demnach nicht nur die Kupplung an, die eine Verbindung zwischen der ersten Welle und dem Leistungseingang bewirkt, sondern auch eine Reversierübertragungseinheit, die Teil der Reversiereinheit ist und eine Umkehrung der Drehrichtung bewirkt. Diese Reversierübertragungseinheit kann beispielsweise in Form eines dreiteiligen Zahnradsatzes ausgebildet sein und kann entsprechend über eine Reversierkupplung, z. B. eine Lamellenkupplung, zu- oder entkoppelt werden. Demnach wird diese Reversierkupplung nur dann betätigt, wenn eine Umkehrung der Drehrichtung erforderlich ist, wobei dann zugleich die Kupplung zwischen der ersten Welle und dem Leistungseingang bzw. dem Außenwellenabschnitt des ersten Leistungseinganges entkoppelt ist.

Insgesamt hat es sich als besonders vorteilhaft erwiesen, wenn die Reversiereinheit vor der Planetenstufe und damit auch vor den beiden Schaltgruppen angeordnet ist, sodass auch bei einer reversierten Drehrichtung, z. B. bei einer Rückwärtsfahrt die volle Anzahl an Gängen zur Verfügung steht und somit auch im Rückwärtsbetrieb die Getriebespreizung möglichst lückenlos ausgefüllt wird.

Gemäß einer Weiterbildung der Erfindung ist eine dritte Welle zwischen der ersten und der zweiten Welle angeordnet, wobei die zweite Schaltgruppe zwischen der zweiten und der dritten Welle angeordnet ist. Die zweite und die dritte Welle können beispielsweise koaxial nebeneinander oder parallel zueinander angeordnet sein. Bei einer Anordnung koaxial zueinander spricht man von einer sogenannten Zwei-Wellen-Anordnung und bei einer parallelen Anordnung von einer Drei-Wellen-Anordnung, da alle drei Wellen parallel zueinander ausgerichtet sind, sodass sich entsprechend in einer senkrecht zur Drehachse der einzelnen Wellen erstreckenden Richtung der Bauraum im Vergleich zu einer Zwei-Wellen-Anordnung größer ist.

Bevorzugt ist die zweite Schaltgruppe mit zumindest einer Synchronisiereinheit ausgebildet. Mit Hilfe einer solchen Synchronisierungseinheit kann der Leistungspfad der zweiten Schaltgruppe vorgewählt werden. Das bedeutet, dass die Synchronisierungseinheiten bestimmen, über welchen Leistungspfad der zweiten Schaltgruppe übertragen werden soll. Die zweite Schaltgruppe ist hierzu bevorzugt in Form eines Doppelkupplungsgetriebes ausgebildet, so dass die Übertragungseinheiten in zwei separate Teilgetriebe aufgeteilt sind. Die Schaltung der Übersetzungseinheiten erfolgt dann über die Schaltung der Synchronisiereinheiten, wobei die Teilgetriebe über jeweils eine Kupplung z. B. eine Lamellenkupplung zugeschaltet werden. Das Schalten der Synchronisiereinheiten wird auch als Vorwählen bezeichnet.

Bei einer Synchronisiereinheit werden ähnlich wie bei einer Lamellenkupplung zwei koaxial zueinander angeordnete und rotierbare Wellen über einen Synchronring stirnseitig kontaktiert, wobei der Synchronring einen Reibschluss zwischen den einzelnen Wellen ausbildet und zu einer Synchronisierung der Rotationsgeschwindigkeiten führt.

Hierbei können die Synchronisiereinheiten auch so ausgebildet sein, dass diese jeweils mehrere z. B. zwei Leistungspfade vorwählen können. Demnach weisen die Synchronisiereinheiten dann z. B. drei Schaltzustände auf, wobei in einem ersten Schaltzustand eine erste Übertragungseinheit, in einem zweiten Schaltzustand eine zweite Übertragungseinheit und in einem dritten Schaltzustand keine Übertragungseinheit zukoppelt werden kann.

Bevorzugt weisen die erste und/oder die zweite Schaltgruppe zumindest drei, vorzugsweise zumindest vier Übertragungseinheiten auf, wobei aber auch jeweils weitere Übertragungseinheiten, z. B. fünf, sechs oder mehr Übertragungseinheiten, vorgesehen sein können. Bei einer exemplarischen Anzahl von vier Übertragungseinheiten in der ersten Schaltgruppe ergeben sich für die erste Schaltgruppe insgesamt sieben Schaltzustände, da auch jeweils zwei Übertragungseinheiten in jeweils einem unterschiedlichen Leistungspfad miteinander geschaltet werden können. Die zweite Schaltgruppe übertragt die mechanische Leistung bevorzugt lediglich über einen Leistungspfad, sodass bei entsprechend auf vier Übertragungseinheiten in der zweiten Schaltgruppe insgesamt 28 Gänge möglich sind. Diese Anzahl von Gängen steht hierbei bevorzugt sowohl in einer Vorwärtsfahrt als auch in einer Rückwärtsfahrt zur Verfügung. Bei lediglich drei Übertragungseinheiten sowohl in der ersten als auch in der zweiten Schaltgruppe ergibt sich insgesamt eine Anzahl von 15 Gängen sowohl in der Vorwärts- als auch in der Rückwärtsfahrt.

Gegenstand der Erfindung ist auch die Verwendung eines erfindungsgemäßen Getriebes in einer Landmaschine, insbesondere einen Traktor gemäß Patentanspruch 12 sowie ein Verfahren zum Betrieb eines erfindungsgemäßen Getriebes gemäß Anspruch 13.

Gemäß diesem Verfahren werden die Schaltzustände der ersten Schaltgruppe derart durchlaufen, dass abwechselnd entweder nur eine Übertragungseinheit des ersten Leistungspfades oder jeweils eine Übertragungseinheit sowohl im ersten als auch zumindest im zweiten Leistungspfad zugeschaltet sind. Bevorzugt ist hierbei bei einer gemeinsamen Schaltung des ersten und des zweiten Leistungspfades die Planetenkupplung zwischen den Leistungsausgängen der Planetenstufe nicht zugekoppelt.

Gemäß einer bevorzugten Weiterbildung des Verfahrens werden nacheinander erst die Schaltzustände der ersten Schaltgruppe und erst danach die Schaltzustände der zweiten Schaltgruppe durchlaufen. Dies bedeutet, dass bei einem Hochschalten des Getriebes zunächst erst alle Schaltzustände der ersten Schaltgruppe durchlaufen werden, erst dann wird die zweite Schaltgruppe in einen neuen Schaltzustand gebracht und die einzelnen Schaltzustände der ersten Schaltgruppe noch einmal durchlaufen. Diese Reihenfolge wird beibehalten, bis auch der letzte Schaltzustand in der zweiten Schaltgruppe erreicht ist.

Im Folgenden wird die Erfindung anhand eines exemplarischen Ausführungsbeispiels näher erläutert. Es zeigen:
- Fig. 1: eine Landmaschine mit einem Antriebsstrang, der ein erfindungsgemäßes Getriebe umfasst,
- Fig. 2: ein erfindungsgemäßes Getriebe im Zwei-Wellen-Design,
- Fig. 3: ein erfindungsgemäßes Getriebe im Drei-Wellen-Design,
- Fig. 4: eine Schaltmatrix für den Vorwärtsbetrieb des erfindungsgemäßen Getriebes gemäß der Figur 2.

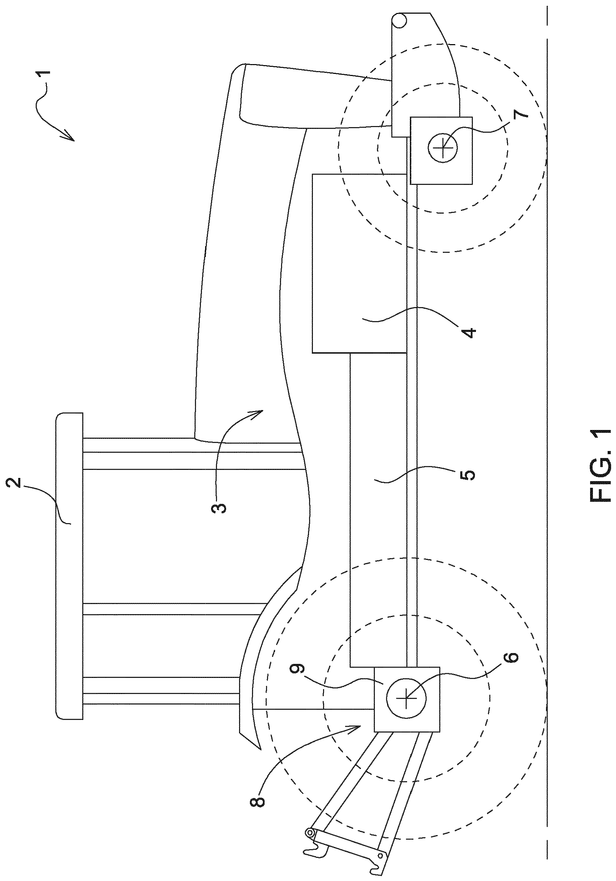

Die Fig. 1 zeigt eine Landmaschine 1 in Gestalt eines Traktors mit einer Kabine 2 und einem Antriebsstrang 3, wobei der Antriebsstrang 3 einen Antriebsmotor 4 und ein Getriebe 5 umfasst. Der Antriebsmotor 4 ist als Verbrennungskraftmaschine ausgeführt. Ferner ist ein Fahrantrieb 8 vorgesehen, der ein Achsgetriebe 9 und eine permanent angetriebene hintere Fahrzeugachse 6 aufweist. Zusätzlich umfasst der Fahrantrieb 8 eine bedarfsweise angetriebene vordere Fahrzeugachse 7.

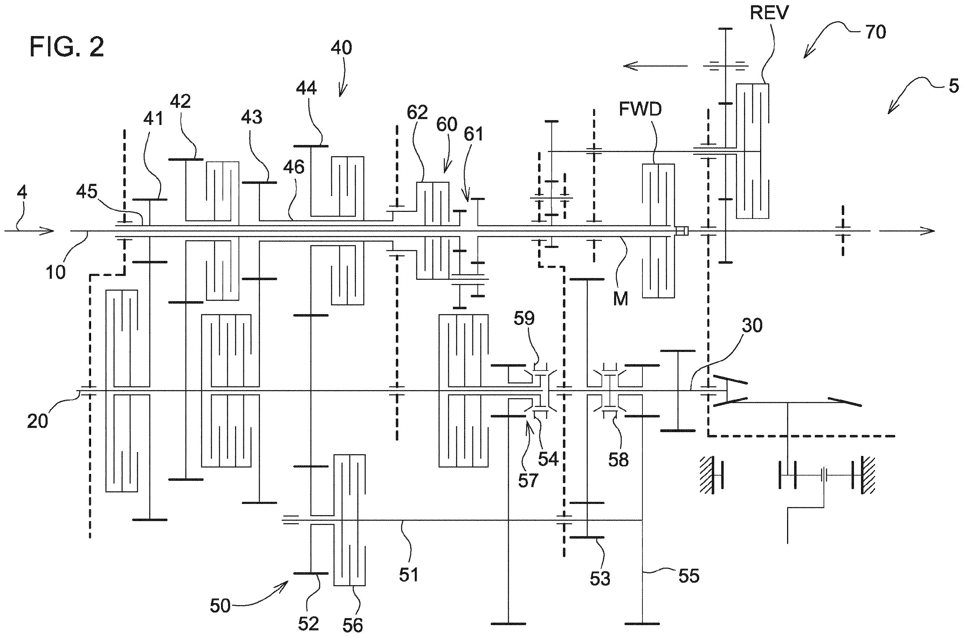

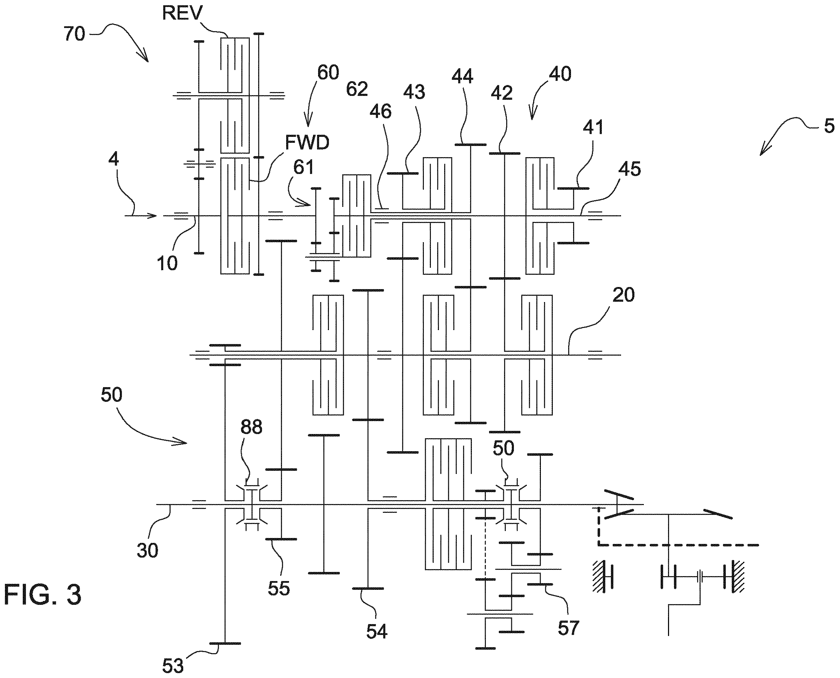

Das erfindungsgemäße Getriebe 5 ist in den Fig. 2 und 3 dargestellt, wobei es sich bei der in der Fig. 2 dargestellten Ausführungsform um ein sogenanntes Zwei-Wellen-Design und in der Fig. 3 um ein sogenanntes Drei-Wellen-Design handelt.

Gemäß der Fig. 2 sind drei Wellen 10, 20, 30 vorgesehen, die parallel zueinander angeordnet sind und wobei jeweils die erste Welle 10 und die zweite Welle 20 über eine erste Schaltgruppe 40 und die zweite Welle 20 und die dritte Welle 30 über eine zweite Schaltgruppe 50 miteinander in Verbindung stehen. Die erste Welle 10 wird von dem Antriebsmotor 4 angetrieben und weist demnach eine dem Antriebsmotor 4 angeglichene Drehzahl auf. Am hinteren Ende der ersten Welle 10 ist eine Lamellenkupplung FWD vorgesehen, über die die erste Welle 10 mit einem Eingangsaußenwellenabschnitt 11 direkt gekoppelt werden kann. Dieser Eingangsaußenwellenabschnitt 11 umschließt die erste Welle 10 umfangseitig und weist in einem zugekoppelten Zustand der Lamellenkupplung FWD die gleiche Drehzahl auf wie auch die erste Welle 10.

Darüber hinaus sind zwei weitere Außenwellenabschnitte auf der ersten Welle 10 vorgesehen, die im Folgenden als Ausgangsaußenwellenabschnitte 45, 46 bezeichnet werden. Der zweite Ausgangsaußenwellenabschnitt 46 umschließt hierbei sowohl die erste Welle 10 als auch den ersten Ausgangsaußenwellenabschnitt 45. Die Ausgangsaußenwellenabschnitte 45, 46 sind über eine Planetenanordnung 60 mit dem Eingangsaußenwellenabschnitt 11 verbindbar, sodass jeder der beiden Ausgangsaußenwellenabschnitte 45, 46 einen eigenen Leistungspfad der ersten Schaltgruppe 40 bilden kann, über die jeweils oder gemeinsam eine mechanische Leistung auf die zweite Welle 20 übertragbar ist.

Die Planetenanordnung 60 besteht einerseits aus einer Planetenstufe 61 sowie einer Planetenkupplung 62, wobei die Planetenstufe 61 zwei nebeneinander angeordnete Sonnenräder und zwei nebeneinander angeordnete Planetenräder mit jeweils einem Planetenträger aufweist. Die beiden Planetenträger sind hierbei unmittelbar miteinander gekoppelt und über ein erstes Sonnenrad mit dem Eingangsaußenwellenabschnitt 11 verbunden. Ausgangsseitig sind die Planetenträger mit dem äußeren Lamellenträger der Planetenkupplung 62 und das ausgangsseitige Sonnenrad mit dem inneren Lamellenträger der Planetenkupplung 62 verbunden. Bei einer weiteren Betrachtung wird deutlich, dass wiederum der innere Lamellenträger der Planetenkupplung 62 mit dem ersten Ausgangsaußenwellenabschnitt 45 und der äußere Lamellenträger mit dem zweiten Ausgangsaußenwellenabschnitt 46 verbunden ist.

Beide Ausgangsaußenwellenabschnitte 45, 46 weisen jeweils zwei Übertragungseinheiten 41, 42, 43, 44 in Form von Zahnradpaaren auf, wobei die Antriebszahnräder der Übertragungseinheiten 41,42 auf dem ersten Ausgangsaußenwellenabschnitt 45 und die Antriebszahnräder der Übertragungseinheiten 43, 44 auf dem zweiten Ausgangsaußenwellenabschnitt 46 angeordnet sind. Die Abtriebszahnräder der Übertragungseinheiten 41, 42, 43, 44 sind auf der zweiten Welle 20 angeordnet sind. Durch eine solche Ausgestaltung können entweder die Übertragungseinheiten 41, 42, 43, 44 einzeln geschaltet oder aber auch jeweils in Kombination einer Übertragungseinheit 41, 42 des ersten Ausgangsaußenwellenabschnittes 45 mit einer Übertragungseinheit 43, 44 des zweiten Ausgangsaußenwellenabschnittes 46 geschaltet werden, wobei dann die mechanische Leistung über zwei Leistungspfade auf die zweite Welle 20 übertragen wird. Jeder Übertragungseinheit 41, 42, 43, 44 ist darüber hinaus jeweils eine Lamellenkupplung 41', 42', 43', 44' zugeordnet.

Die zweite Schaltgruppe 50 ist als klassischer Stirnradsatz in Form eines Doppelkupplungsgetriebes ausgebildet. Das Doppelschaltgetriebe beinhaltet zwei Teilgetriebe, an denen jeweils unterschiedliche Übertragungseinheiten 53, 55, 57 angeordnet sind. Ferner sind zur Realisierung der Teilgetriebe Nebenwellen 51a, 51b vorgesehen. Die Nebenwelle 51b fällt hierbei mit der Abtriebswelle 30 zusammen. Die Nebenwelle 51a wird angetrieben über das Abtriebszahnrad der Übertragungseinheit mit dem Antriebszahnrad 44, wobei dieses Antriebszahnrad 44 unabhängig von der Stellung der Planetenkupplung 62 immer in Rotation ist und somit auch stets die Nebenwelle 51 angetrieben werden kann. Die einzelnen Teilgetriebe können durch die Lamellenkupplungen 56a, 56b zugeschaltet werden.

Ferner sind Synchronisiereinheiten 54, 58 vorgesehen, die einerseits einen Gang als Direktkupplung bereitstellen und zugleich auch eine Anbindung der einzelnen Übertragungseinheiten 53, 55, 57 ermöglichen.

Die Fig. 3 zeigt das erfindungsgemäße Getriebe gemäß der Fig. 2 in einer Drei-Wellen-Anordnung, wobei die dritte Welle 30 nunmehr nicht mehr koaxial zur zweiten Welle 20, sondern parallel zu der ersten und der zweiten Welle 10, 20 angeordnet ist. Bei einer solchen Ausgestaltung ist eine Nebenwelle 51 nicht mehr erforderlich. Die wesentlichen Komponenten bleiben jedoch im Wesentlichen gleich. Im Unterschied zu dem Getriebe gemäß der Fig. 2 setzt das Schalten der Übertragungseinheit 57 zusätzlich das Schalten der Synchronisierungseinheit 58 in die entsprechende Stellung voraus, damit die mechanische Leistung auf die Nebenwelle 51b bzw. die Ausgangswelle 30 übertragen werden kann. Gemäß der Fig. 3 ist dies nicht erforderlich.

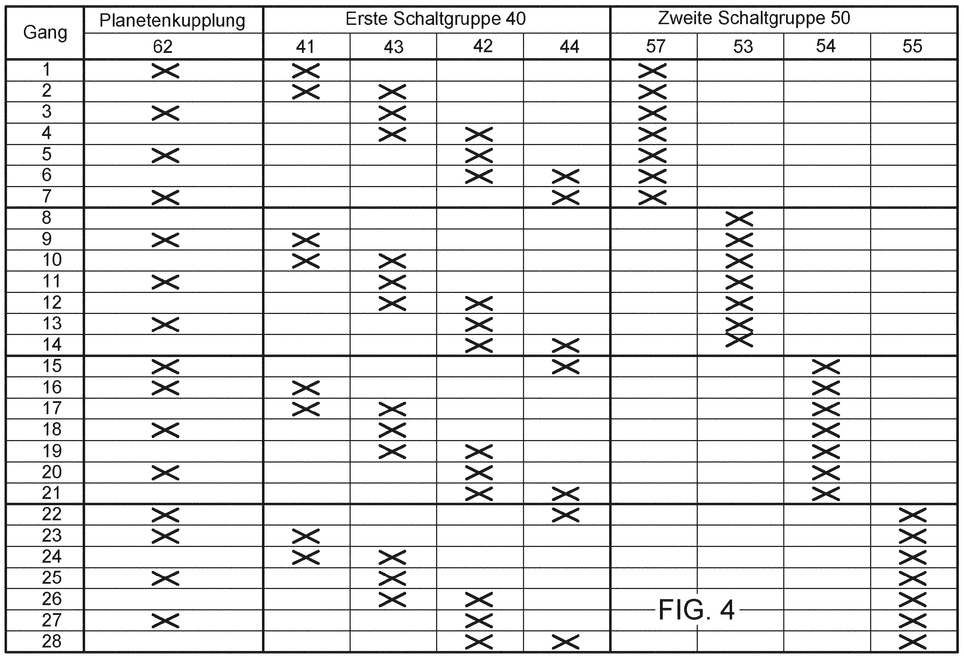

Die Fig. 4 zeigt die Schaltmatrix für den Vorwärtsbetrieb der Landmaschine 1 mit einem Getriebe gemäß der Fig. 2. Anhand der Schaltmatrix ist sichtbar, dass jeweils abwechselnd immer erst nur eine Übertragungseinheit 41, 42, 43, 44 in der ersten Schaltgruppe 40 geschaltet wird und in einem darauffolgenden Gang jeweils zwei Übertragungseinheiten 41, 42, 43, 44, wobei die beiden Übertragungseinheiten 41, 42, 43, 44 unterschiedlichen Ausgangsaußenwellenabschnitten 45, 46 und damit zwei unterschiedlichen Leistungspfaden zugeordnet sind. Insgesamt sind somit bei vier Übertragungseinheiten 41, 42, 43, 44 insgesamt sieben Gänge möglich. Die Schaltung der zweiten Schaltgruppe 50 ist der ersten Schaltgruppe 40 nachgeordnet. Die Synchronisierungseinheit 58 kann hierbei entweder die Übertragungseinheit 53 oder die Übertragungseinheit 57 zuschalten. Im Gegensatz dazu schaltet die Synchronisierungseinheit 59 entweder die Übertragungseinheit 57 oder in einem Direktgang die Nebenwelle 51b bzw. die Ausgangswelle 30.

## Patentansprüche

1. Getriebe (5) mit zumindest einer ersten und einer zweiten Welle (10, 30), wobei zumindest eine erste und eine zweite Schaltgruppe (40, 50) zwischen der ersten und der zweiten Welle (10, 30) angeordnet sind, wobei jede der Schaltgruppen (40, 50) zumindest zwei einzeln schaltbare Übertragungseinheiten aufweist, die sich hinsichtlich ihres Übersetzungsverhältnisses voneinander unterscheiden,
wobei die erste Schaltgruppe (40) über eine Planetenstufe (60) mit der ersten Welle (10) in Wirkverbindung gebracht werden kann, die derart ausgebildet ist, dass eine über die erste Welle (10) eingebrachte mechanische Leistung über einen ersten und/oder über einen zweiten zu- oder abkoppelbaren Leistungspfad auf die zweite Welle (30) übertragbar ist,
wobei jedem Leistungspfad zumindest eine Übertragungseinheit der ersten Schaltgruppe (40) zugeordnet ist und wobei in zumindest einem Schaltzustand der ersten Schaltgruppe (40) der Leistungsfluss über zumindest jeweils eine Übertragungseinheit des ersten und des zweiten Leistungspfades verläuft,
**dadurch gekennzeichnet, dass** die erste Schaltgruppe (40) zumindest zwei Außenwellenabschnitte (45, 46) aufweist, die die erste Welle (10) koaxial umgeben, wobei jeweils zumindest eine der Übertragungseinheiten einem der Außenwellenabschnitte (45, 46) zugeordnet ist, und
wobei ein erster Außenwellenabschnitt (45) dem ersten Leistungspfad und ein zweiter Außenwellenabschnitt (46) dem zweiten Leistungspfad zugeordnet ist.

2. Getriebe nach Anspruch 1,
wobei die Planetenstufe einen Leistungseingang und zumindest zwei Leistungsausgänge aufweist, die jeweils mit einem der Leistungspfade in Verbindung stehen,
wobei zwischen den beiden Leistungsausgängen der Planetenstufe (60) eine Planetenkupplung (62) angeordnet ist, die in einem zugekoppelten Zustand die beiden Leistungsausgänge unmittelbar miteinander verbindet.

3. Getriebe nach Anspruch 2,
wobei der erste Leistungsausgang mit dem ersten Außenwellenabschnitt (45) und der zweite Leistungsausgang mit dem zweiten Außenwellenabschnitt (46) verbunden sind.

4. Getriebe nach Anspruch 2 oder 3,
wobei die Planetenkupplung (62) eine Lamellenkupplung mit einem Innen- und einem Außenlamellenträger ist,
wobei die Lamellenträger jeweils mit einem der Leistungsausgänge der Planetenstufe (62) und einem der Leistungspfade, insbesondere mit einem der Außenwellenabschnitte (45, 46) in Verbindung stehen.

5. Getriebe nach einem der Ansprüche 1 bis 4,
wobei die Übertragungseinheiten zumindest teilweise als Zahnradpaare und/oder als Direktkupplung ausgebildet sind.

6. Getriebe nach einem der Ansprüche 1 bis 5,
wobei zwischen der ersten Welle (10) und der Planetenstufe (60) eine koppelbare Reversiereinheit (70) angeordnet ist, die im zugekoppelten Zustand eine Umkehrung der Drehrichtung der Planetenstufe (60) bewirkt.

7. Getriebe nach einem der Ansprüche 1 bis 6,
wobei eine dritte Welle (20) zwischen der ersten (10) und der zweiten Welle (30) angeordnet ist, wobei die zweite Schaltgruppe (50) zwischen der zweiten und der dritten Welle (20, 30) angeordnet ist.

8. Getriebe nach einem der Ansprüche 1 bis 7,
wobei zumindest jeder Übertragungseinheit der ersten Schaltgruppe (40) eine Kupplung, insbesondere eine Lamellenkupplung, zugeordnet ist, über die die Übertragungseinheit zu- oder abgekoppelt werden kann.

9. Getriebe nach einem der Ansprüche 1 bis 8,
wobei die Übertragungseinheiten der zweiten Schaltgruppe (50) zumindest teilweise über eine Synchronisiereinheit (59, 58) zu- oder abgekoppelt werden können.

10. Getriebe nach einem der Ansprüche 1 bis 9,
wobei die erste und/oder die zweite Schaltgruppe (40, 50) zumindest drei, vorzugsweise zumindest vier Übertragungseinheiten aufweist.

11. Verwendung eines Getriebes (5) gemäß einem der Ansprüche 1 bis 10 in einer Landmaschine (1), insbesondere einem Traktor.

12. Verfahren zum Betrieb eines Getriebes (5) nach einem der Ansprüche 1 bis 10,
wobei die Schaltzustände der ersten Schaltgruppe (40) derart durchlaufen werden, dass abwechselnd entweder nur eine Übertragungseinheit des ersten Leistungspfades oder jeweils eine Übertragungseinheit sowohl im ersten als auch zumindest im zweiten Leistungspfad zugeschaltet sind.

13. Verfahren nach Anspruch 12, wobei bei einer gemeinsamen Schaltung des ersten und des zweiten Leistungspfades die Planetenkupplung (62) zwischen den Leistungsausgängen der Planetenstufe nicht zugekoppelt ist.

14. Verfahren nach Anspruch 12 oder 13, wobei nacheinander erst die Schaltzustände der ersten Schaltgruppe (40) und erst danach die Schaltzustände der zweiten Schaltgruppe (50) durchlaufen werden,
wobei bei einem Hochschalten des Getriebes zunächst erst alle Schaltzustände der ersten Schaltgruppe durchlaufen werden, erst dann wird die zweite Schaltgruppe in einen neuen Schaltzustand gebracht und die einzelnen Schaltzustände der ersten Schaltgruppe noch einmal durchlaufen werden, und
wobei diese Reihenfolge beibehalten wird, bis auch der letzte Schaltzustand in der zweiten Schaltgruppe erreicht ist.

## Claims

1. Gear mechanism (5) having at least a first and a second shaft (10, 30), wherein at least a first and a second switching group (40, 50) are arranged between the first and the second shaft (10, 30), wherein each of the switching groups (40, 50) has at least two transmission units which can be switched individually and which differ from each other in terms of their transmission ratio, wherein the first switching group (40) can be moved into active connection with the first shaft (10) by means of a planetary stage (60) which is constructed in such a manner that a mechanical power which is introduced via the first shaft (10) can be transmitted to the second shaft (30) via a first and/or via a second power path which can be coupled or uncoupled,
wherein at least one transmission unit of the first switching group (40) is associated with each power path and wherein in at least one switching state of the first switching group (40) the power flow extends over at least one transmission unit of the first and the second power path in each case, **characterized in that**
the first switching group (40) has at least two outer shaft portions (45, 46) which coaxially surround the first shaft (10), wherein at least one of the transmission units is associated with one of the outer shaft portions (45, 46) and
wherein a first outer shaft portion (45) is associated with the first power path and a second outer shaft portion (46) is associated with the second power path.

2. Gear mechanism according to Claim 1, wherein the planetary stage has a power input and at least two power outputs which are each connected to one of the power paths,
wherein there is arranged between the two power outputs of the planetary stage (60) a planetary coupling (62) which in a connected state connects the two power outputs directly to each other.

3. Gear mechanism according to Claim 2, wherein the first power output is connected to the first outer shaft portion (45) and the second power output is connected to the second outer shaft portion (46).

4. Gear mechanism according to Claim 2 or 3, wherein the planetary coupling (62) is a multi-disc clutch having an inner and an outer disc carrier,
wherein the disc carriers are connected in each case to one of the power outputs of the planetary stage (62) and one of the power paths, in particular to one of the outer shaft portions (45, 46).

5. Gear mechanism according to one of Claims 1 to 4, wherein the transmission units are constructed at least partially as toothed wheel pairs and/or as a direct clutch.

6. Gear mechanism according to one of Claims 1 to 5, wherein between the first shaft (10) and the planetary stage (60) there is arranged a reversing unit (70) which can be coupled and which in the coupled state brings about a reversal of the rotation direction of the planetary stage (60).

7. Gear mechanism according to one of Claims 1 to 6, wherein a third shaft (20) is arranged between the first shaft (10) and the second shaft (30), wherein the second switching group (50) is arranged between the second and the third shaft (20, 30).

8. Gear mechanism according to one of Claims 1 to 7, wherein there is associated with at least each transmission unit of the first switching group (40) a clutch, in particular a multi-disc clutch, via which the transmission unit can be coupled or uncoupled.

9. Gear mechanism according to one of Claims 1 to 8, wherein the transmission units of the second switching group (50) can be at least partially coupled or uncoupled by means of a synchronization unit (59, 58).

10. Gear mechanism according to one of Claims 1 to 9, wherein the first and/or the second switching group (40, 50) have/has at least three, preferably at least four transmission units.

11. Use of a gear mechanism (5) according to one of Claims 1 to 10 in an agricultural machine (1), in particular a tractor.

12. Method for operating a gear mechanism (5) according to one of Claims 1 to 10, wherein the switching states of the first switching group (40) are passed through in such a manner that alternately either only one transmission unit of the first power path or in each case one transmission unit both in the first and at least in the second power path are connected.

13. Method according to Claim 12, wherein, with a common switching of the first and the second power path, the planetary clutch (62) between the power outputs of the planetary stage is not coupled.

14. Method according to Claim 12 or 13, wherein firstly the switching states of the first switching group (40) and only afterwards the switching states of the second switching group (50) are successively passed through;
wherein, when the gear mechanism is changed up, initially only all switching states of the first switching group are passed through, only then is the second switching group moved into a new switching state and the individual switching states of the first switching group are passed through again; and wherein this sequence is maintained until the last switching state in the second switching group is also reached.

## Revendications

1. Transmission (5) comportant au moins un premier et un deuxième arbre (10, 30), au moins un premier et un deuxième groupe de commutation (40, 50) étant disposés entre le premier et le deuxième arbre (10, 30), chacun des groupes de commutation (40, 50) présentant au moins deux unités de transfert pouvant être commutées individuellement, lesquelles sont différentes les unes des autres en ce qui concerne leur rapport de démultiplication,
le premier groupe de commutation (40) pouvant être amené en liaison fonctionnelle avec le premier arbre (10) par le biais d'un étage planétaire (60), qui est réalisé de telle sorte qu'une puissance mécanique introduite par le biais du premier arbre (10) peut être transférée au deuxième arbre (30) par le biais d'un premier et/ou par le biais d'un deuxième trajet de puissance pouvant être accouplé ou désaccouplé,
au moins une unité de transfert du premier groupe de commutation (40) étant associée à chaque trajet de puissance et, dans au moins un état de commutation du premier groupe de commutation (40), le flux de puissance s'étendant sur au moins respectivement une unité de transfert du premier et du deuxième trajet de puissance, **caractérisée en ce que** le premier groupe de commutation (40) présente au moins deux parties d'arbre extérieur (45, 46) qui entourent coaxialement le premier arbre (10),
au moins l'une des unités de transfert étant associée respectivement à l'une des parties d'arbre extérieur (45, 46), et
une première partie d'arbre extérieur (45) étant associée au premier trajet de puissance et une deuxième partie d'arbre extérieur (46) étant associée au deuxième trajet de puissance.

2. Transmission selon la revendication 1,
l'étage planétaire présentant une entrée de puissance et au moins deux sorties de puissance qui sont respectivement en liaison avec l'un des trajets de puissance,
un embrayage planétaire (62) étant disposé entre les deux sorties de puissance de l'étage planétaire (60), lequel embrayage relie directement l'une à l'autre les deux sorties de puissance dans un état accouplé.

3. Transmission selon la revendication 2,
la première sortie de puissance étant reliée à la première partie d'arbre extérieur (45) et la deuxième sortie de puissance étant reliée à la deuxième partie d'arbre extérieur (46).

4. Transmission selon la revendication 2 ou 3, l'embrayage planétaire (62) étant un embrayage à disques doté d'un porte-disques intérieur et d'un porte-disques extérieur,
les porte-disques étant en liaison respectivement avec l'une des sorties de puissance de l'étage planétaire (62) et l'un des trajets de puissance, en particulier avec l'une des parties d'arbre extérieur (45, 46).

5. Transmission selon l'une des revendications 1 à 4,
les unités de transfert étant réalisées au moins partiellement sous forme de paires de roue dentées et/ou sous forme d'embrayage direct.

6. Transmission selon l'une des revendications 1 à 5, une unité d'inversion (70) pouvant être accouplée étant disposée entre le premier arbre (10) et l'étage planétaire (60), laquelle provoque une inversion du sens de rotation de l'étage planétaire (60) dans l'état accouplé.

7. Transmission selon l'une des revendications 1 à 6, un troisième arbre (20) étant disposé entre le premier (10) et le deuxième arbre (30), le deuxième groupe de commutation (50) étant disposé entre le deuxième et le troisième arbre (20, 30).

8. Transmission selon l'une des revendications 1 à 7, un embrayage, en particulier un embrayage à disques, étant associée au moins à chaque unité de transfert du premier groupe de commutation (40), embrayage par le biais duquel l'unité de transfert peut être accouplée ou désaccouplée.

9. Transmission selon l'une des revendications 1 à 8, les unités de transfert du deuxième groupe de commutation (50) pouvant être accouplées ou désaccouplées au moins partiellement par le biais d'une unité de synchronisation (59, 58).

10. Transmission selon l'une des revendications 1 à 9, le premier et/ou le deuxième groupe de commutation (40, 50) présentant au moins trois, de préférence au moins quatre unités de transfert.

11. Utilisation d'une transmission (5) selon l'une des revendications 1 à 10 dans une machine agricole (1), en particulier un tracteur.

12. Procédé de fonctionnement d'une transmission (5) selon l'une des revendications 1 à 10,
selon lequel on passe par les états de commutation du premier groupe de commutation (40) de telle sorte qu'en alternance soit seulement une unité de transfert du premier trajet de puissance soit respectivement une unité de transfert est raccordée à la fois dans le premier et également au moins dans le deuxième trajet de puissance.

13. Procédé selon la revendication 12, selon lequel l'embrayage planétaire (62) entre les sorties de puissance de l'étage planétaire n'est pas accouplé en cas de commutation commune du premier et du deuxième trajet de puissance.

14. Procédé selon la revendication 12 ou 13, selon lequel on passe tour à tour tout seulement par les états de commutation du premier groupe de commutation (40) et ensuite seulement par les états de commutation du deuxième groupe de commutation (50),
selon lequel lors d'un passage de vitesse supérieure de la transmission, on passe tout d'abord seulement par tous les états de commutation du premier groupe de commutation, ensuite seulement le deuxième groupe de commutation est amené à un nouvel état de commutation et on passe encore une fois par les états de commutation individuels du premier groupe de commutation, et
selon lequel cette séquence est maintenue jusqu'à ce que le dernier état de commutation dans le deuxième groupe de commutation soit également atteint.
